# EUROPÄISCHE PATENTANMELDUNG

(11) **EP 1 995 490 A2**
(43) Veröffentlichungstag der Anmeldung: **26.11.2008**
(21) Anmeldenummer: 08154178.1
(22) Anmeldetag: 08.04.2008
(51) Int. Cl.: F16F 9/32

(54) **Zylinderrohr**

(30) Priorität: 24.05.2007 DE 102007024336
(71) Anmelder: ZF Friedrichshafen AG, 88038 Friedrichshafen (DE)
(72) Erfinder: Thein, Thomas, 97526 Sennfeld (DE); Asadi, Hassan, 97422 Schweinfurt (DE)

(57) **Zusammenfassung**

Zylinderrohr (3), insbesondere für einen Schwingungsdämpfer (1), wobei ein Boden (19) mittels einem Schweißverfahren gasdicht an einem Ende des Zylinderrohres (3) befestigt wird und dadurch einen Innenraum (29) begrenzt und ein Schweißspritzerschutz den Innenraum vor Verunreinigungen schützt, der derart angeordnet ist, dass er einen schweißspritzerisolierenden Raum im Innenraum des Zylinderrohres schafft.

## Beschreibung

Die Erfindung betrifft ein Zylinderrohr mit einem Schweißspritzerschutz, insbesondere für einen Schwingungsdämpfer, gemäß dem Oberbegriff von Patentanspruch 1.

Zur Befestigung eines Bodens an einem Zylinderrohr eines Schwingungsdämpfers sind zahlreiche Verfahren bekannt. Ein verwendetes Fügeverfahren ist hierfür das Widerstandsschweißen, insbesondere das Kondensator-Entladungsschweißen. Dieses hat jedoch zum Nachteil, dass sich kleine Schweißspritzer bilden und an der Innenmantelfläche des Zylinderrohres ablagern. Die Innenmantelfläche des Zylinderrohres dient jedoch als Führungsfläche für ein an einer Kolbenstange befestigtes Kolbenventil oder einen Trennkolben. Durch die durch Schweißspritzer hervorgerufenen Unebenheiten der Innenmanteloberfläche des Zylinderrohres kann das Kolbenventil oder der Trennkolben und somit folglich der gesamte Schwingungsdämpfer in seiner Funktion erheblich beeinträchtigt oder sogar zerstört werden.

Das Entfernen der Schweißspritzer für Schwingungsdämpferzylinderrohre ist aus produktionstechnischer Hinsicht nicht realisierbar, da Serienprodukte vor allem kurze und automatisierte Produktionsschritte voraussetzen.

Zur Umgehung dieses Problems wird in der DE 92 03 542 U1 ein Spritzschutz beschrieben. Dieser wird durch einen Dichtring gebildet, der auf der Höhe einer Schweißnaht zwischen einer an dem Boden ausgeführten Nut und der Innenmantelfläche des Zylinderrohres verspannt ist. Der Dichtring erweist sich damit als Blockiereinrichtung gegen eindringende Schweißspritzer in den Zylinderrohrinnenraum. Des Weiteren erfüllt er die Funktion eines radialen Zentrierelements für den Boden, da der Außendurchmesser des Dichtrings größer ausgebildet ist als der des Bodens. Durch das Übermaß können ferner Undichtigkeiten in der Schweißnaht kompensiert werden.

Ein wesentlicher Nachteil dieser Variante ist jedoch die Herstellung des Bodens. Zur Ausbildung der Nut an dem Boden sind komplizierte und kostenaufwendige Umformwerkzeuge nötig, die nicht in Relation zum gefertigten Endprodukt stehen.

Um eine Verbindung zwischen dem Schwingungsdämpfers und einem Fahrzeug herzustellen, sind am Schwingungsdämpfer Befestigungsgelenke angeordnet. In der DE 92 03 542 U1 ist das Befestigungsgelenk über eine zylindrische Erhebung mit einem Gewinde mit dem Boden verschraubt.

Häufig werden aber auch die Befestigungsgelenke mittels Schweißverfahren am Boden fixiert, der sich dabei so stark erhitzt, dass es zur Beschädigung/Verbrennung des mit dem Boden verbundenen Dichtrings führt. Dadurch ist dieser zum Einen in seiner Dichtungs- und Zentrierfunktion gestört. Zum Anderen kann er im Falle eines Einrohrdämpfers den über dem Boden angeordneten Gasraum verschmutzen, was die Funktion eines im Zylinderrohr axial beweglich angeordneten Trennkolbens negativ beeinflusst.

Die Aufgabe der vorliegenden Erfindung ist es, einen Schweißspritzerschutz zu schaffen, der die mit dem Stand der Technik verbundenen Probleme der zu hohen Werkzeugkosten und der Dichtringzerstörung behebt.

Erfindungsgemäß wird die Aufgabe dadurch gelöst, dass der Schweißspritzerschutz derart ausgeführt ist, dass er einen schweißspritzerisolierenden Raum im Innenraum des Zylinderrohres schafft.

Dieser Raum reduziert den Streuungsbereich der durch die Verschweißung hervorgerufenen Schweißspritzer und schützt den Innenraum, wie z.B. den Gasraum eines Einrohrschwingungsdämpfers, vor Verunreinigungen.

Vorteilhafterweise wird der schweißspritzerisolierende Raum unter zu Hilfenahme eines vom Boden separaten Bauteils realisiert. Dieses kann z.B. als einfaches Stanzteil aus Stahlblech ausgeführt sein, was im Vergleich zur Bodenumformung aus dem Stand der Technik wesentlich kostengünstiger ist.

Für die Anordnung des separaten Bauteils im Zylinderrohr bieten sich mehrere Möglichkeiten.

Eine Variante besteht darin, dass sich das separate Bauteil zumindest mittelbar am Boden und an der Zylinderrohrinnenvvand abstützt, wodurch das separate Bauteil eindeutig in seiner Lage definiert ist.

Dabei ist es von Vorteil das separate Bauteil bodenseitig zu befestigen. Dadurch werden ein Lösen und damit ein Bewegen des separaten Bauteils im Zylinderrohr vermieden. Dies ist insofern wichtig, da Schwingungsdämpfer möglichst geräuscharm arbeiten sollen und dem Aufkommen von unerwünschten Klappergeräuschen vorgebeugt wird. Außerdem wird der Zeitaufwand des Zusammenbaus minimiert, da der Schvveißspritzerschutz und der Boden gleichzeitig montiert werden können.

Eine leicht umsetzbare Befestigungsvariante besteht in mindestens einer punktuellen Verbindung, z.B. einer Punktverschweißung oder einer Punktverklebung.

Im einfachsten Fall wird das separate Bauteil zentral an der Bodenmitte befestigt.

Vorteilhafterweise kann die Befestigung aber auch in einem Abstand zur Bodenmitte vorgenommen werden. Bei einer späteren Verschweißung eines Befestigungsgelenks an der Außenseite des Bodens, die üblicherweise an der Bodenmitte erfolgt, wird der Boden in einem Bereich um die Schweißnaht stark erhitzt, was sich unter Umständen negativ auf die Fixierung des separaten Bauteils auf der Gegenseite auswirken kann. Durch die radiale Verlagerung der Punktverbindung nach außen kann dieses Problem vermieden werden.

Eine nächste Ausführungsvariante sieht die kraftschlüssige Anordnung des separaten Bauteils innerhalb der Zylinderrohrinnenwand vor.
Dadurch kann auf eine bodenseitige Befestigung verzichtet werden, was vor allem eine Zeitersparnis während des Montageprozesses mit sich bringt.

In weiterer Ausgestaltung kann der schvveißspritzerisolierende Raum ebenso durch eine Aussparung des Bodens geschaffen werden. Die Aussparung kann beispielsweise spanend hergestellt werden.

In allen Anordnungsfällen soll der schweißspritzerisolierende Raum vom innenraum des Zylinderrohres abgedichtet sein, um Verunreinigungen des Innenraums zuverlässig zu verhindern.

Dies kann zum Einen durch eine zylinderrohrinnenwandseitige Dichtfläche am separaten Bauteil geschehen. Durch das Auftragen von z.B. einer dünnen Kunststoffschicht wird so neben der Abdichtung auch ein Nebenschluss durch ein metallisches separates Bauteil im Falle einer Widerstandsverschweißung verhindert.

Optional kann eine Abdichtung auch durch eine Dichtstrecke realisiert werden. Diese erstreckt sich in axialer Richtung zwischen der Zylinderrohrinnenwand und dem separaten Bauteil, oder dem Boden, und hat eine Breite von nur wenigen Mikrometern, was ausreicht um einen Feststoffdurchtritt in Form von Schweißspritzern zu unterbinden. Der Vorteil dieser Variante besteht in ihrer Einteiligkeit, da dadurch der Zusammenbauaufwand minimiert wird.

Des Weiteren kann die Abdichtung des schweißspritzerisolierenden Raums ebenso durch die Anordnung eines elastischen Rings erfolgen, wobei dieser einen Abstand zum Boden einhält, um die aus dem Stand der Technik aufgezeigten Probleme zu vermeiden. Als elastischer Ring ist vorteilhafterweise ein handelsüblicher O-Ring vorgesehen, da dieser in nahezu allen Abmessungen preiswert zur Verfügung steht.
Der O-Ring ist entweder zwischen dem Boden und der Zylinderrohrinnenwand oder zwischen dem separaten Bauteil und der Zylinderrohrinnenwand positioniert. Dies hat zum Vorteil, dass wie bereits oben beschrieben ein Nebenschluss vermieden wird. Außerdem dient der elastische Ring als Führungselement bei der Montage, da sein Außendurchmesser größer ausgeführt ist, als der des Bodens oder des separaten Bauteils.
Um im Belastungsfall des Zylinderrohres ein Abrutschen des O-Rings zu verhindern, besitzt das separate Bauteil eine Nut zur Aufnahme des elastischen Rings.

Alternativ kann aber auch eine Anlagefläche zur axialen Sicherung des Rings geschaffen werden. Wird das separate Bauteil als einfaches Stanzteil gefertigt kann die Anlagefläche beispielsweise durch Umbiegen einer Kante am Bauteil gebildet werden.

Der Querschnitt des separaten Bauteils zeichnet sich im einfachsten Fall durch eine scheibenförmige Ausgestaltung aus, da diese herstellungstechnisch am kostengünstigsten zu fertigen ist. Die Scheibe ähnelt im montierten Zustand einem Trennkolben in einem Einrohrschwingungsdämpfer. Ob die Scheibe unter Belastung in Richtung Bodenseite verschoben wird, spielt hierbei keine Rolle, da sie den Zylinderrohrinnenraum lediglich während der Verschweißung des Bodens mit dem Zylinderrohr schützen soll.

Die Ausbildung eines topffömigen Querschnitts lässt sich vorteilhafterweise durch ein Stanzteil realisieren. Dabei ist die Ausbildung einer Nut oder einer Anlagefläche für den elastischen Ring einfach umzusetzen.

Durch die senkrechte Ausprägung eines T-förmigen Querschnitts des separaten Bauteils, stützt sich dieses bodenseitig ab und ist durch die Druckbeaufschlagung in einem Gasraum eines Einrohrschwingungsdämpfers in seiner Lage definiert.

Ein hülsenförmiger Querschnitt zeichnet sich vor allem durch seinen geringen Platzbedarf im Innenraum des Zylinderrohres aus.

Das separate Bauteil kann im Wesentlichen als elastisches Bauteil mit einer Vorspannung gegenüber dem Zylinderrohr ausgeführt sein. Dies trägt z.B. zu einer erhöhten Anpresskraft des separaten Bauteils an die Zylinderrohrinnenvvand bei und erhöht dadurch die Abdichtung.

Ein druckbelastete Gasraum befindet sich bodenseitig im Zylinderrohr eines Einrohrschwingungsdämpfers. Der Gasraum ist auf die Abmessungen des gesamten Schwingungsdämpfers und seiner Komponenten ausgelegt. Wird nun ein separates Bauteil integriert, so wird auch folglich der Gasraum verkleinert. Um dies zu verhindern sind am separaten Bauteil Durchtrittsöffnungen z.B. in Form von Schlitzen vorgesehen, die einen Druckausgleich zwischen dem schweißspritzerisolierendem Raum und dem Gasraum schaffen. Außerdem wird dadurch gewährleistet, dass das separate Bauteil unter Belastung des Schwingungsdämpfers druckausgeglichen ist und sich innerhalb des Zylinderrohres nicht axial verschieben kann.

Sind die Durchtrittsöffnungen derart ausgeführt, dass die Möglichkeit eines Schweißspritzerdurchtritts besteht, wird dem separaten Bauteil in einem geringen Abstand ein Abdeckteil nachgeordnet, dass die Durchtrittsöffnungen zumindest teilweise abdeckt. Dadurch werden Verunreinigungen des Gasraums vermieden, ein Druckausgleich ist jedoch noch möglich.

Optional kann der Druckausgleich mit mindestens einem Schlitz als Durchtrittsöffnung erfolgen, der im montiertem Zustand des separaten Bauteils im Zylinderrohr zumindest teilverschlossen ist. Das separate Bauteil ist hierbei vorteilhafterweise als elastisches Bauteil ausgeführt.

Um einen Nebenschluss bei der Verschweißung des Bodens grundsätzlich zu vermeiden, kann das separate Bauteil aus Kunststoff gefertigt werden. Kunststoffformteile lassen sich mittels Spritzgussverfahren in hoher Genauigkeit herstellen und sind vor allem bei großen Stückzahlen wirtschaftlich effizient.
Ein weiterer Vorteil, der sich daraus ergibt, ist die Einsparung an Gewicht, was vor allem in der Automobilindustrie einen interessanten Faktor darstellt.

Die Erfindung wird nachfolgend anhand der beiliegenden Zeichnungen beispielhaft erläutert.
- Fig. 1:: Längsschnitt durch einen Einrohrschwingungsdämpfer
- Fig. 2:: Schweißspritzerschutz mit topfförmigen separaten Bauteil
- Fig. 3:: Schweißspritzerschutz gem. Fig. 2 mit nachgeordnetem Abdeckteil
- Fig. 4:: Schweißspritzerschutz mit hülsenförmigen separaten Bauteil
- Fig. 5:: Schweißspritzerschutz mit T-förmigen separaten Bauteil
- Fig. 6:: Kraftschlüssige Andordnung des Schweißspritzerschutzes mit scheibenförmigen separaten Bauteil
- Fig. 7:: Kraftschlüssige Andordnung des Schweißspritzerschutzes mit topfförmigen separaten Bauteil
- Fig. 7a:: Topfförmiges separates Bauteil nach Fig. 7 vor der Montage
- Fig. 7b:: Topfförmiges separates Bauteil nach Fig. 7 nach der Montage
- Fig. 8:: Einteiliger Schweißspritzerschutz

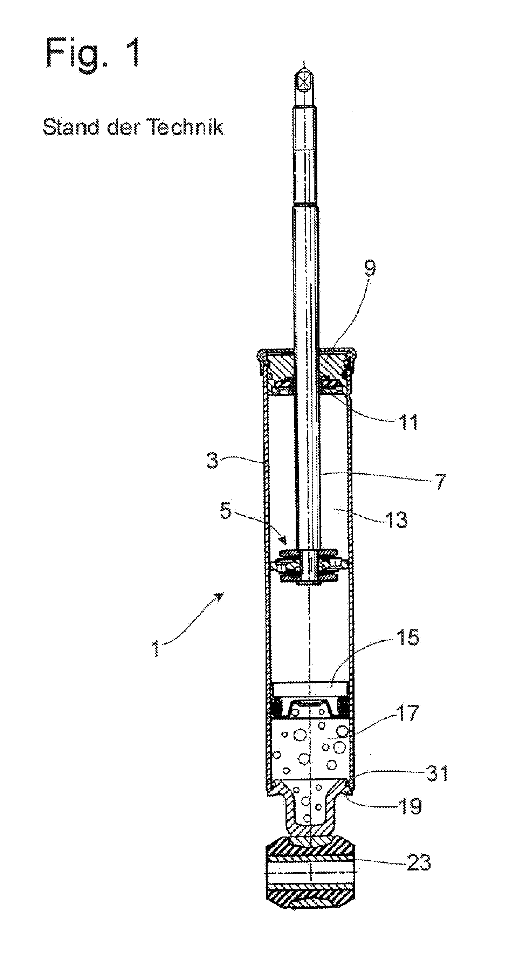

Die Fig. 1 zeigt einen aus dem Stand der Technik bekannten Einrohrschwingungsdämpfer 1.
Dieser umfasst im Wesentlichen ein Zylinderrohr 3, in dem ein Kolbenventil 5 an einer Kolbenstange 7 axial beweglich angeordnet ist. An der Austrittsseite der Kolbenstange 7 verschließt eine Führung 9 mit einer Dichtung 11 einen mit Dämpfmedium gefüllten Arbeitsraum 13, der durch einen axial beweglichen Trennkolben 15 von einem druckbelasteten Gasraum 17 separiert wird. Dieser kompenseniert das bei Ein- oder Ausfahrbewegung der Kolbenstange 7 verdrängte Volumen. Der Trennkolben 15 bewegt sich dabei entsprechend. Der Gasraum 17 wird endseitig über einen eingeschweißten Boden 19 verschlossen, an dem zum Zylinderrohrinnenraum hin ein elastischer Ring 31 angeordnet ist, der den Gasraum 17 während des Schweißvorgangs vor Schweißspritzern schützt. Ein Befestigungsgelenk 23 zur Verbindung mit einem Fahrzeug ist außenseitig mit dem Boden verbunden.

Die folgenden Ausführungsbeispiele zeigen verschiedene Anordnungsvarianten des bodenseitigen Schweißspritzerschutzes und dadurch verschiedene Varianten des schweißspritzerisolierenden Raumes 29.

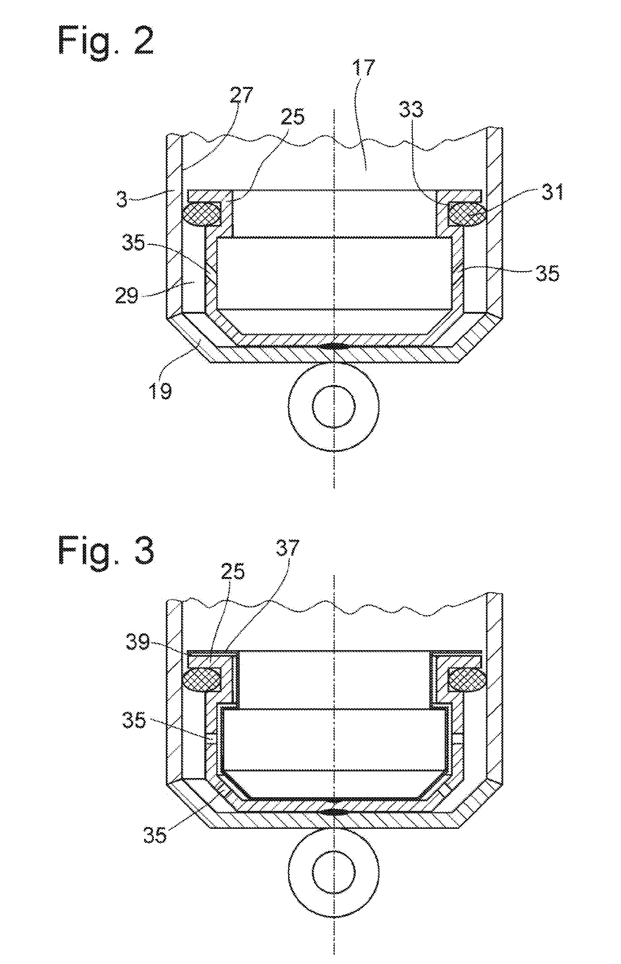

In Fig. 2 ist der Schweißspritzerschutz als ein vom Boden 19 separates Bauteil 25 dargestellt. Dieses stüzt sich am Boden 19 und mittelbar an der Zylinderrohrinnenwand 27 ab, wodurch der schweißspritzerisolierende Raum 29 in seiner Ausdehnung definiert ist.
Der Außendurchmesser des topfförmigen ausgebildeten Bauteils 25 ist kleiner ausgeführt als der Innendurchmesser des Zylinderrohres 3. Der Schweißspritzerschutz ist mittels Punktverschweißung an der Bodenmitte fixiert. Zur Aufnahme eines elastischen Rings 31 ist am separaten Bauteil 25 eine Nut 33 ausgebildet. Als elastischer Ring 31 wird ein handelsüblicher O-Ring 31 verwendet, dessen Außendurchmesser größer ausgeführt ist als der des topfförmigen Bauteils 25. Dadurch wird der Boden 19 bei der Montage automatisch zum Zylinderrohr 3 zentriert. Bei der anschließenden Verschweißung des Bodens 19 mit dem Zylinderrohr 3, bei der das Kondensator-Entladungsschweißen (KES) zur Anwendung kommt, wird durch das Übermaß des O-Rings 31 zugleich ein Nebenschluß verhindert.
Hauptaufgabe des O-Rings 31 ist es jedoch, den schweißspritzerisolierende Raum 29 vom Gasraum 17 abzudichten. Dafür ist die Nut 33 des separaten Bauteils 25 in einem axialen Abstand zum Boden 19 angebracht, sodass der O-Ring 31 bei der Bodenanschweißung, keinem übermäßigen Wärmeeinfluß ausgesetzt ist und nicht zerstört werden kann.
Um den schweißspritzerisolierenden Raum 29 gegenüber dem Gasraum druckausgeglichen zu halten, sind am separaten Bauteil 25 Durchtrittsöffnungen 35 angebracht, die der Schweißspritzergröße angepaßt sind. Damit dennoch keine Schweißspritzer in den Gasraum 17 gelangen können, sind die Durchtrittsöffnungen 35 zum Einen in einem relativ spitzen Winkel zur Schweißnaht und zum Anderen in gegenläufiger Richtung zur Streuungsrichtung der Schweißspritzer angeordnet.

Ergänzend kann, wie die Fig. 3 zeigt, dem separaten Bauteil 25 aus Fig. 2 aber auch ein Abdeckteil 37 nachgeordnet sein, dass die Durchtrittsöffnungen 35 zumindest teilweise abdeckt. Die Größe und Lage der Durchtrittsöffnungen 35 kann damit relativ frei gewählt werden. Ein Ringspalt 39 zwischen dem separaten Bauteil 25 und dem Abdeckteil 37 ermöglicht einen Druckausgleich.

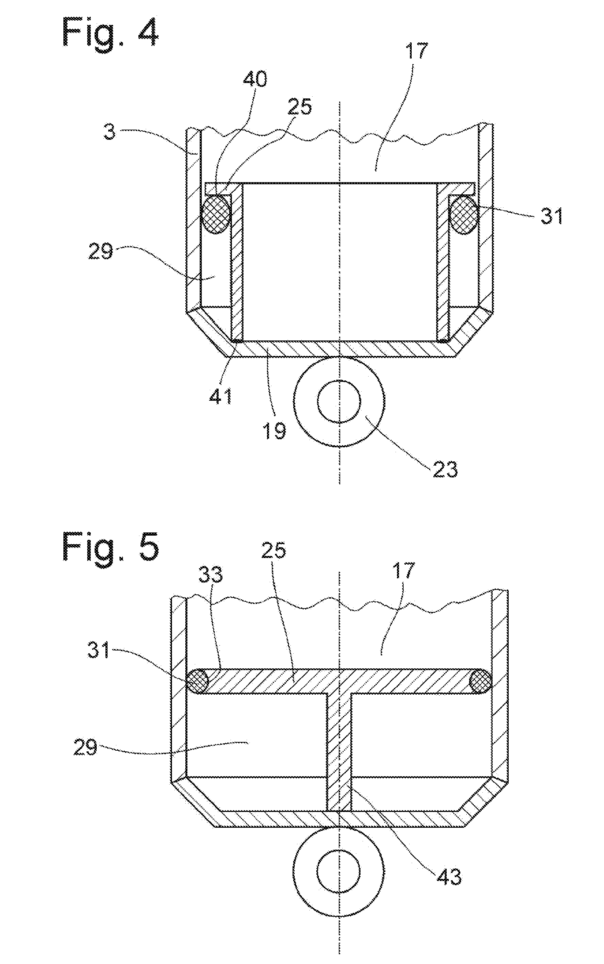

Im nächsten Ausführungsbeispiel (Fig. 4) wird ein ringförmiger schweißspritzerisolierender Raum 29 durch ein hülsenförmiges Bauteil 25 (z.B. Blechbiegeteil) geschaffen. Um einen Nebenschluss bei der KES-Bodenverschweißung zu vermeiden, ist der Außendurchmesser der Hülse 25 wiederrum kleiner als der Innendurchmesser des Zylinderrohres 3. Die zylinderrohrinnenwandseitige Abdichtung erfolgt über den elastischen Ring 31, der wie im vorangegangenem Beispiel ein Übermaß zum separaten Bauteil 25 aufweist. Durch das Formen einer Anlagefläche 40 wird der elastischen Ring 31 daran gehindert unter Belastung des Schwingungsdämpfers 1 in den Gasraum 17 abzurutschen.
Bei der mittigen Verschweißung eines Befestigungsgelenks 23 an der Außenseite des Bodens 19 wird vor allem das MAG-Schvveißen angewandt, bei dem eine starke Hitzeeinwirkung auf den Boden 19 ausgeübt wird. Dabei besteht die Gefahr, dass sich das separate Bauteil 25 auf der Gegenseite vom Boden 19 löst, wenn es ebenfalls mittig befestigt ist. Durch die radiale Verlagerung der Befestigungsstelle 41 des Schweißspritzerschutzes nach außen hin wird dem vorgebeugt.

Alternativ kann das separate Bauteil 25 aber auch T-förmig ausgebildet sein (Fig. 5). Zur Abdichtung ist zylinderrohrinnenvvandseitig ein elastischer Ring in Form eines O-Rings 31 angeordnet, der in einer Nut 33 fixiert ist. Die Außendurchmesser des T-förmigen Bauteils 25 und des O-Rings 31 sind wie in den vorangegangenen Beispielen ausgeführt. Die senkrechte Ausprägung 43 des separaten Bauteils 25 dient als eine Art Griff und erleichtert damit die Montage. Außerdem stützt es sich dadurch bodenseitig ab und ist unter Druckbeaufschlagung im Gasraum 17 in seiner Lage definiert. Somit ist der schweißspritzerisolierende Raum 29 als Ringraum ausgebildet.

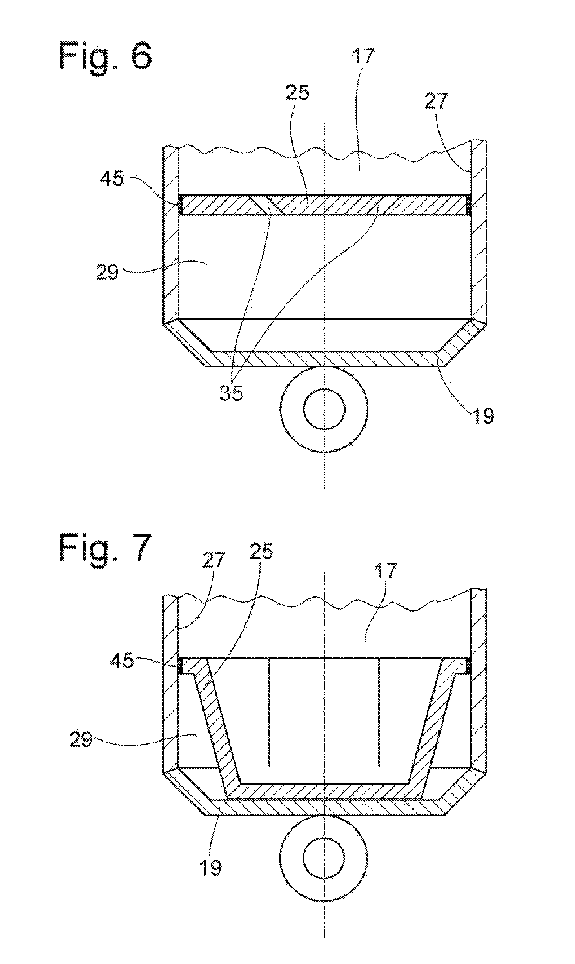

Die Fig. 6 zeigt die kraftschlüssige Anordnung des separaten Bauteils 25 innerhalb der Zylinderrohrinnenwand 27. Dadurch dient der komplette Raum zwischen dem Boden 19 und dem separaten Bauteil 25 als schweißspritzerisolierender Raum 29. Das separate Bauteil 25 ist hier scheibenförmig ausgebildet und an seiner Außenseite mit einer Dichtfläche 45 , z.B. aus PE, zur Abdichtung vom Gasraum 17 versehen. Die Scheibe 25 weist Durchtrittsöffnungen 35 auf, die annäherungsweise wie die Schenkel eines V in einem gewissen Winkel zueinandergerichtet sind. Dadurch können Schweißspritzer maximal bis zur Innenfläche der Durchtrittsöffnungen 35 vordringen. Außerdem wird wiederum ein Druckausgleich ermöglicht, der das scheibenförmige Bauteil 25 daran hindert bei Belastung des Schwingungsdämpfers axiale Bewegungen wie der Trennkolben 15 vorzunehmen.

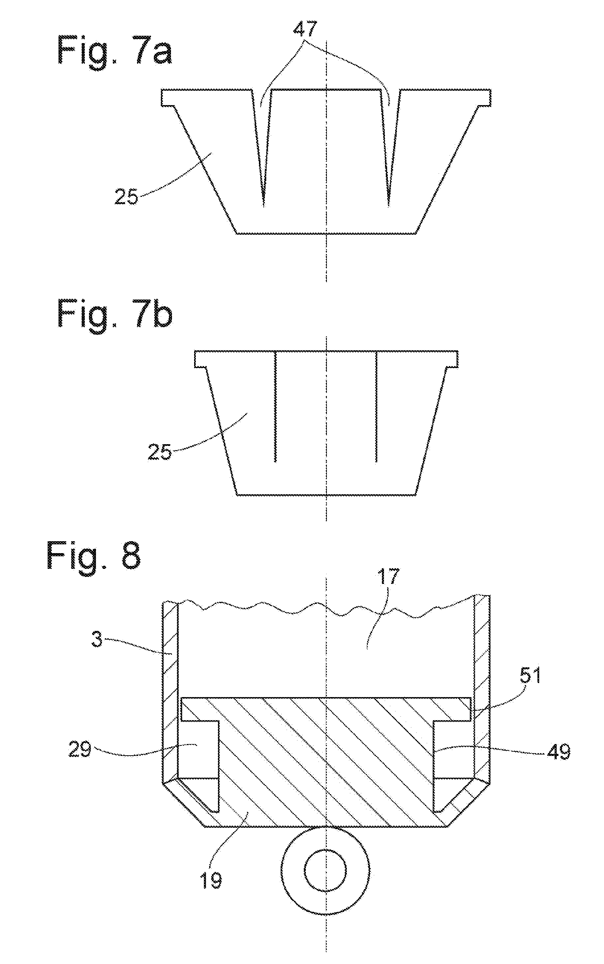

Als Alternative zu einer scheibenförmigen Ausgestaltung des separaten Bauteils 25 ist in Fig. 7 die kraftschlüssige Anordnung mit einem topfförmigen Kunststoffteil 25 dargestellt. Der schweißspritzerisolierende Raum 29 ist somit durch den Boden 19 und dem Kunststoffteil 25 axial begrenzt und weist einen U-förmigen Querschnitt auf. Das topfförmige Bauteil 25 ist im Wesentlichen elastischen Charakters und mit einer Vorspannung gegenüber der Zylinderrohrinnenwand 27 versehen. An seiner zylinderrohrinnenseitigen Berührfläche ist eine Dichtfläche 45 aufgetragen, die den schweißspritzerisolierenden Raum 29 vom Gasraum 17 abdichtet. Durch die Vorspannung wird die Dichtwirkung zusätzlich erhöht.
Das elastische Bauteil 25 ist in diesem Beispiel mit axialen Schlitzen 47 als Durchtrittsöffnungen 35 versehen.
Die Fig. 7a zeigt das separate Bauteil 25 in der Seitenansicht vor der Montage. Die Schlitze 47 sind dabei im Wesentlichen konisch ausgeführt. Dies ermöglicht, dass sich das Bauteil im montierten Zustand (Fig. 7b) zumindest teilverschließt. Dadurch wird ein Schweißspritzerdurchtritt verhindert, ein Druckausgleich zwischen Gasraum und schweißspritzerisolierendem Raum jedoch noch ermöglicht.

Grundsätzlich ist zu vermerken, dass bei allen Anordnungen, bei denen ein elastischer Ring 31 oder eine Dichtfläche 45 zur Abdichtung des schweißspritzerisolierenden Raums 29 verwendet wird Durchtrittsöffnungen 35 zum Druckausgleich am separaten Bauteil 25 angebracht sein können.

In Fig. 8 bildet eine Aussparung 49 des Bodens 19 einen schweißspritzerisolierenden Raum 29. Die Aussparung 49 kann z.B. spanend gefertigt sein, wobei die Oberflächengüte eine untergeordnete Rolle spielt. Der Außendurchmesser des Bodens 19 ist im Bereich des Innenraums kleiner ausgeführt, als der Innendurchmesser des Zylinderrohres 3. Kleiner in diesem Zusammenhang bedeutet eine Größendifferenz von nur wenigen Mikrometern. Die axiale Ausdehnung in diesem Bereich des Bodens 19 ist allerdings um ein vielfaches größer, als der Abstand zwischen dem Zylinderrohr 3 und dem Boden 19. Dadurch wird eine Dichtstrecke 51 gebildet, die gewährleistet, dass keine Schweißspritzer in den Gasraum 17 gelangen können, das Druckniveau jedoch im Gasraum 17 sowie im schweißspritzerisolierenden Raum 29 gleich ist.

## Patentansprüche

1. Zylinderrohr (3), insbesondere für einen Schwingungsdämpfer (1), wobei ein Boden (19), mittels einem Schweißverfahren gasdicht an einem Ende des Zylinderrohres (3) befestigt wird und dadurch einen Innenraum begrenzt und ein Schweißspritzerschutz den Innenraum vor Verunreinigungen schützt,
**dadurch gekennzeichnet,**
**dass** der Schweißspritzerschutz (25;31;37;45;49;51) derart angeordnet ist, dass er einen schweißspritzerisolierenden Raum (29) im Innenraum des Zylinderrohres (3) schafft.

2. Zylinderrohr (3) nach Anspruch 1,
**dadurch gekennzeichnet,**
**dass** der Schweißspritzerschutz als separates Bauteil (25) zum Boden (19) ausgeführt ist.

3. Zylinderrohr (3) nach Anspruch 2,
**dadurch gekennzeichnet,**
**dass** sich das separate Bauteil (25) zumindest mittelbar am Boden (19) und an der Zylinderrohrinnenwand (27) abstützt.

4. Zylinderrohr (3) nach einem der Ansprüche 2 oder 3,
**dadurch gekennzeichnet,**
**dass** das separate Bauteil (25) am Boden (19) befestigt ist.

5. Zylinderrohr (3) nach Anspruch 4,
**dadurch gekennzeichnet,**
**dass** das separate Bauteil (25) mit mindestens einer punktuellen Verbindung am Boden (19) befestigt ist.

6. Zylinderrohr (3) nach einem der Ansprüche 4 oder 5,
**dadurch gekennzeichnet,**
**dass** das separate Bauteil (25) an der Bodenmitte befestigt ist.

7. Zylinderrohr (3) nach einem der Ansprüche 4 oder 5,
**dadurch gekennzeichnet,**
**dass** das separate Bauteil (25) in einem Abstand zur Bodenmitte befestigt ist.

8. Zylinderrohr (3) nach Anspruch 2,
**dadurch gekennzeichnet,**
**dass** das separate Bauteil (25) kraftschlüssig innerhalb der Zylinderrohrinnenwand (27) angeordnet ist.

9. Zylinderrohr (3) nach Anspruch 1,
**dadurch gekennzeichnet,**
**dass** der schweißspritzerisolierende Raum (29) durch eine Aussparung (49) des Bodens (19) gebildet wird.

10. Zylinderrohr (3) nach mindestens einem der Ansprüche 1 bis 9,
**dadurch gekennzeichnet,**
**dass** der schweißspritzerisolierende Raum (29) abgedichtet ist.

11. Zylinderrohr (3) nach Anspruch 10,
**dadurch gekennzeichnet,**
**dass** das separate Bauteil (25) zylinderrohrinnenwandseitig eine Dichtfläche (45) aufweist.

12. Zylinderrohr (3) nach Anspruch 10,
**dadurch gekennzeichnet,**
**dass** der schweißspritzerisolierende Raum (29) durch eine Dichtstrecke (51) vom Innenraum abgedichtet ist.

13. Zylinderrohr (3) nach Anspruch 10,
**dadurch gekennzeichnet,**
**dass** der schweißspritzerisolierende Raum (29) durch einen elastischen Ring (31) vom Innenraum abgedichtet ist, wobei der elastische Ring (31) einen Abstand zum Boden (19) einhält.

14. Zylinderrohr (3) nach Anspruch 13,
**dadurch gekennzeichnet,**
**dass** der elastische Ring (31) zwischen der Zylinderrohrinnenvvand (27) und dem Boden (19) angeordnet ist.

15. Zylinderrohr (3) nach Anspruch 13,
**dadurch gekennzeichnet,**
**dass** der elastische Ring (31) zwischen der Zylinderrohrinnenwand (27) und dem separaten Bauteil (25) angeordnet ist.

16. Zylinderrohr (3) nach Anspruch 13,
**dadurch gekennzeichnet,**
**dass** das separate Bauteil (25) eine Nut (33) zur Aufnahme des elastischen Rings (31) aufweist.

17. Zylinderrohr (3) nach Anspruch 13,
**dadurch gekennzeichnet,**
**dass** das separate Bauteil (25) eine Anlagefläche (40) zur axialen Sicherung des elastischen Rings (31) aufweist.

18. Zylinderrohr (3) nach mindestens einem der Ansprüche 2 bis 8,
**dadurch gekennzeichnet,**
**dass** das separate Bauteil (25) einen scheibenförmigen Querschnitt aufweist.

19. Zylinderrohr (3) nach mindestens einem der Ansprüche 2 bis 8,
**dadurch gekennzeichnet,**
**dass** das separate Bauteil (25) einen topfförmigen Querschnitt aufweist.

20. Zylinderrohr (3) nach mindestens einem der Ansprüche 2 bis 8,
**dadurch gekennzeichnet,**
**dass** das separate Bauteil (25) einen T-förmigen Querschnitt aufweist.

21. Zylinderrohr (3) nach mindestens einem der Ansprüche 2 bis 8,
**dadurch gekennzeichnet,**
**dass** das separate Bauteil (25) hülsenförmig ausgebildet ist.

22. Zylinderrohr (3) nach mindestens einem der Ansprüche 2 bis 8,
**dadurch gekennzeichnet,**
**dass** das separate Bauteil (25) im Wesentlichen als elastisches Bauteil ausgeführt ist und eine Vorspannung gegenüber dem Zylinderrohr (3) aufweist.

23. Zylinderrohr (3) nach mindestens einem der Ansprüche 2 bis 8,
**dadurch gekennzeichnet,**
**dass** das separate Bauteil (25) Durchtrittsöffnungen (35) aufweist.

24. Zylinderrohr (3) nach Anspruch 23,
**dadurch gekennzeichnet,**
**dass** dem mit Durchtrittsöffnungen (35) versehenem separaten Bauteil (25) ein Abdeckteil (37) nachgeordnet ist, dass die Durchtrittsöffnungen (35) zumindest teilweise abdeckt.

25. Zylinderrohr (3) nach Anspruch 23,
**dadurch gekennzeichnet,**
**dass** das separate Bauteil (25) mindestens einen Schlitz (47) als Durchtrittsöffnung (35) vorsieht, der im montierten Zustand des separaten Bauteils (25) im Zylinderrohr (3) zumindest teilverschlossen ist.

26. Zylinderrohr (3) nach mindestens einem der Ansprüche 2 bis 8,
**dadurch gekennzeichnet,**
**dass** das separate Bauteil (25) aus Kunststoff gefertigt ist.
